# EUROPEAN PATENT SPECIFICATION

(11) **EP 1 028 166 B1**
(45) Date of publication and mention of the grant of the patent: **19.11.2003**
(21) Application number: 00200434.9
(22) Date of filing: 09.02.2000
(51) Int. Cl.: C21C 5/52, C21C 5/54, C21C 7/00, C21C 7/076, C22B 9/10

(54) **Composition for hindering the formation of iron oxides in steel-melting slag and EAF scrap- based steelmaking process using the same**
Zusammensetzung zur Verringerung der Eisenoxidbildung in Schlacken von Stahlschmelzen und deren Verwendung beim Lichtbogenofenverfahren zur Herstellung von Stahl aus Schrott
Composition pour réduire la formation d'oxydes du fer dans le laitier d'acier en fusion et son application lors de la production d'acier à partir de mitraille dans un four électrique à arc

(30) Priority: 12.02.1999 IT MI990286
(43) Date of publication of application: 16.08.2000
(73) Proprietor: Minerals & Metals Italia S.p.A., 24065 Lovere (Bergamo) (IT)
(72) Inventor: Bellicini, Marcello, 24065 Lovere (Bergamo) (IT)
(74) Representative: Marchi, Massimo

(56) References cited:
- US-A- 4 060 406
- DATABASE WPI Section Ch, Week 198928 Derwent Publications Ltd., London, GB; Class M24, AN 1989-202082 XP002146621 & JP 01 139714 A (MEISEI KAKO KK), 1 June 1989 (1989-06-01)
- DATABASE WPI Section Ch, Week 199406 Derwent Publications Ltd., London, GB; Class L02, AN 1994-046665 XP002146622 & RU 2 000 344 C (DNEPR METAL INST), 7 September 1993 (1993-09-07)
- PATENT ABSTRACTS OF JAPAN vol. 009, no. 317 (C-319), 12 December 1985 (1985-12-12) & JP 60 152611 A (SHIN NIPPON SEITETSU KK), 10 August 1985 (1985-08-10)
- LEE F T ET AL: "STUDY ON THE REDUCTION BEHAVIOUR OF FEO IN EAF SLAG" STEEL TIMES INTERNATIONAL,GB,FMJ INTERNATIONAL PUBLICATIONS, REDHILL, SURREY, ENGLAND, vol. 19, no. 1, 1995, pages 20-21,24-25, XP000498035 ISSN: 0143-7798

## Description

### TECHNICAL FIELD OF THE INVENTION

The present invention relates to a composition capable of hindering and reducing the formation of iron oxides in steel melting slag, and to a process for obtaining a slag with a low level of iron oxides.

More particularly, this invention relates to a composition capable of hindering and reducing the formation of iron oxides in the slag formed during the production of steel from scrap iron in an electric furnace, and to a melting process that involves the use of such composition.

### BACKGROUND TO THE INVENTION

Direct-arc electric furnaces, such as, for example, of the eccentric bottom tapping (EBT) type are widely used nowadays for making steel from scrap iron. These have a taphole at the bottom for tapping the molten steel into a ladle or they have a taphole at the side. These furnaces use the energy released by conduction, convection and radiation from an electric arc, which is set up between graphite electrodes (introduced from the roof of the furnace), on the one hand, and the material charged into the furnace, on the other hand.

These furnaces generally have a well-known cylindrical crucible structure with a vertical axis and a concave hearth made of drawn plates.

The bottom is lined with about 30 cm refractory blocks and with about 60 cm conducting refractory hearth material. The side walls are lined with about 70 cm refractory material, an approximately 30 cm section of which is the slag turning zone, and the other approximately 30 cm section is represented by the safety ledge.

The roof of the furnace is made of a metallic material and is cooled with water.

The charge of the furnace generally consists of about 90 wt-% of scrap iron and about 10 wt-% of pig iron and/or carbon. Additives such as lime and limestone are added later, during the melting operation in order to form a slag, while a fine carbon powder is introduced to protect the lining of the side walls and the roof from radiation.

Before being charged into the furnace, the scrap iron and pig iron are graded on the basis of the usual parameters of size and chemical composition.

The charge is then introduced into the furnace from above, using suitable baskets, which are preferably preheated with fuel-fired burners to facilitate the melting operation.

The production capacity of the furnace is generally of from 60 to 120 tonnes.

When the charging stage is finished, the furnace is closed by lowering its roof. The latter generally carries three electrodes, which are arranged in the corners of an equilateral triangle, in order to balance the three-phase power circuit correctly.

During the melting process, a current of oxygen is blown into the molten bath through refractory nozzles located on the bottom or at the side of the furnace. Typically about 35-42 Nm³ of oxygen are introduced per tonne of charge material. This corresponds to a flow-rate of 4200-5040 Nm³ per hour for melting 100 tonnes of scrap iron, the total time being 50 minutes.

The main function of the oxygen is to remove the unwanted chemical elements present in the scrap iron and the pig iron, by oxidation. These elements are, for example, silicon, aluminium, vanadium, titanium, zirconium, lead, zinc, magnesium, calcium and excess carbon.

However, this stage also involves the undesirable oxidation of a certain amount of iron.

The resulting oxides pass from the molten bath to the surface, where they form a floating layer called slag.

Other undesirable chemical elements, such as for example sulphur, oxygen and some others are only partly removed during this stage. Their removal is completed later, during the treatment to which the steel is subjected in the subsequent steps called "outside the furnace", such as, for example, first in the ladle and then in a ladle furnace.

This melting process in an electric furnace also involves the addition of a certain amount of carbon. It is advantageous to introduce the first batch of carbon with the scrap iron at the beginning of the process, typically in an amount of about 10-12 kg per tonne of scrap iron. The second batch, typically amounting to about 2-5 kg per tonne of scrap iron used, is added a few minutes before the end of the melting operation.

At the end of the melting process, the liquid steel has approximately the following chemical composition by weight: 0.1% of C, 0.2% of Mn, no Si, 0.015% of P, 0.030% of S, no Al, and traces of Cu, Sn, Bi, As and Sb, the rest being Fe.

The level of Cu, Sn, Bi, As and Sb can only be regulated via the choice of the charge materials introduced into the furnace.

When the molten steel has reached the required chemical composition, it is tapped into the ladle.

The furnace is generally not discharged fully, and the slag floating on top of the liquid steel is collected separately. When the steel has been tapped into the ladle, a small amount of steel (the "foot" of the bath) is kept in the furnace to facilitate the onset of the melting of the next charge.

The slag extracted is then discharged into a suitable container, where it is cooled, crushed, reduced to small pieces, and finally dumped on a slag heap, because it cannot be re-used.

This slag therefore represents a financial loss, due partly to the loss of iron and heat it takes with it, and partly to the cost of transport and suitable disposal.

The slag formed in the melting process typically represents about 10-12% of the molten mass and has the following composition by weight SiO₂ = 8-10%; Al₂O₃ = 5-7%; Fe₂O₃ = 40-55%; MnO = 4-5%; Cr₂O₃ = 1-2%; CaO = 20-25%; MgO = 2-4%; TiO₂ ≤ 0.5%; K₂O ≤ 0.01 %; Na₂O ≤ 0.06%; P₂O₅ ≤ 0.42%, and S ≤ 0.08%.

It follows therefore that about 4-5.5 tonnes of Fe₂O₃, corresponding to about 3-4.2 tonnes of iron, are formed in the production of a batch of about 100 tonnes of steel. This represents a loss of about 3-4.2% of the iron charged into the furnace, with a consequent increase in cost.

It is known that the addition of metallic aluminium in granular form counteracts the formation of iron oxides and would improve the results of the melting process.

However, this material is fairly expensive and would be needed in a rather large amount. Thus, on the basis of its redox potential (E₀ = -1.706), the stoichiometric amount of metallic aluminium in granular form that is needed to eliminate the loss (i.e. the oxidation) of 1 tonne of iron is about 322 kg. In other words, 644 kg of granular metallic aluminium would be needed to reduce this loss from about 4% to about 2%. However, the yield of this redox reaction in practice never reaches the theoretical value, and the required amount of granular metallic aluminium is more expensive than the iron recovered. As this process is not economic, it has not been put into use.

As far as it is known to the Applicant, no-one has so far marketed an additive that can counteract and substantially reduce the formation of iron oxides at an acceptable cost.

Although the iron oxide present in the largest amount in the slag is ferric oxide (Fe₂O₃), the term "iron oxides" used in this Description and the Claims is not limited to this compound but also includes all the other iron oxides, such as for example Fe₃O₄, FeO and Fe_{0.97}O.

In order to overcome these drawbacks of the prior art, the inventor has evaluated various alternative solutions.

It has thus been found surprisingly that these drawbacks can be overcome by the use of a mixture comprising in part some by-products of other metallurgical processes, for example the slag formed in the production of primary aluminium (where the metal is obtained from its ore), in the production of secondary aluminium (where the metal is obtained from aluminium scrap), and in the production of silicon.

### OBJECTS OF THE INVENTION

It is therefore a first object of this invention to provide a composition that is capable of hindering and reducing the formation of iron oxides in the slag formed in melting operations.

It is a second object of this invention to provide a process for preparing this composition.

It is a third object of this invention to provide a process for using this composition in the melting of scrap iron in an electric furnace.

### SUMMARY OF THE INVENTION

It is a first object of this invention to provide a composition comprising substantially from 35 to 50 wt-% of C, from 10 to 20 wt-% of Al, from 25 to 40 wt-% of Al₂O₃, from 0 to 3 wt-% of CaO and from 0 to 3 wt-% of MgO, provided however that the combined amount of CaO and MgO is of from 1 to 6%.

This composition preferably further contains from 2 to 10 wt-% and, even more preferably, from 5 to 8 wt-% of SiO₂.

Preferably, the amount of C in said composition ranges from 40 to 45%; the amount of aluminium ranges from 10 to 15%; the amount of aluminium oxide ranges from 25 to 30%; the amount of calcium oxide ranges from 0.5 to 3%, and also the amount of magnesium oxide ranges from 0.5 to 3%; the combined amount of calcium oxide and/or magnesium oxide being of from 2 to 6%. Still preferably, the combined amount of calcium oxide and/or magnesium oxide is of from 5 to 6%.

In a preferred embodiment, the composition of this invention has an average particle size of from 0.1 to 5 mm, and even more preferably, of from 0.1 to 1.5 mm.

The composition of this invention is preferably prepared by finely grinding the components, then adding a binder and granulating the resulting paste to obtain granules having a predetermined average size.

Particularly suitable are those binders that comprise aluminium and silicon compounds (and possibly some other elements) such as, for example, montmorillonites, also known as bentonites.

It is a second object of the present invention to provide a process for the preparation of a granular composition, characterized in that it comprises the following steps:
1) mixing together carbon, aluminium, aluminium oxide, as well as, calcium oxide and/or magnesium oxide, in such quantities that every 100 parts by weight of the resulting mixture contain 35-50 wt-% of C, 10-20 wt-% of Al, 25-40 wt-% of Al₂O₃, 0-3 wt-% of CaO and 0-3 wt-% of MgO, provided however that the combined amount of CaO and MgO is 1-6 wt-%,
2) optionally grounding the thus obtained mixture,
3) kneading such mixture,
4) drying, and
5) granulating the thus obtained mixture.

The kneading step is preferably carried out by a wet process and, even more preferably, with a suitable binder. In the specific case when bentonite is used, the amount of the binder added is of from 3 to 15 wt-%, calculated on the mass to be granulated, and 6-15 wt-% of water are also added, this quantity being also calculated on the mass to be granulated.

The drying step is preferably carried out at 50-200°C.

Alternatively, the composition of this invention is prepared by simply mixing the components together, without the kneading, drying and granulation steps.

It is a third object of the present invention to provide a process for hindering and reducing the formation of iron oxides in the slag during the production of steel in an electric furnace, wherein:
a) scrap iron is melted in the presence of conventional additives, and
b) a current of oxygen is passed into the molten bath, characterized in that
c) 5-10 kg of a composition are introduced per tonne of molten steel over a period of at least 10 minutes in the last stage of the melting operation, before the steel is tapped into the ladle, where said composition comprises, per 100 parts by weight, from 35 to 50 wt-% of C, from 10 to 20 wt-% of Al, from 25 to 40 wt-% of Al₂O₃, from 0 to 3 wt-% of CaO and from 0 to 3 wt-% of MgO, provided however that the combined amount of CaO and MgO is of from 1 to 6%.

This composition is advantageously introduced into the furnace by blowing it in with a lance above and/or below the slag.

Typically, the amount of the composition blown into the furnace above and/or below the slag is of from 5 to 10 kg per tonne of molten steel, and, even more typically, of from 6 to 8 kg per tonne of molten steel.

Alternatively, the composition may be introduced directly into the molten bath by injecting it with a supersonic lance, placed at the side of the furnace, by injecting it through the pipework under the furnace, or in some other suitable way, such as for example adding it from bags during the charging of the furnace.

In the latter case, the injected amount is preferably of from 8 to 12 kg and, even more preferably, of from 10 to 11 kg per tonne of molten steel.

The following examples aim at illustrating this invention without, however, limiting it in any way.

### EXPERIMENTS

### EXAMPLE 1

### Preparation of composition A

| Ingredients | Amount, kg |
|---|---|
| Al | 90 |
| Al₂O₃ | 210 |
| CaO | 20 |
| MgO | 15 |
| C | 315 |
| SiO₂ | 50 |

The above quantities of C, Al, Al₂O₃, CaO, MgO and SiO₂ were thoroughly mixed and finely ground to obtain a fine having a particle size of from 0.1 to 5 mm. This fine was then kneaded with 30 kg of bentonite and 60 litres of water.

The paste was passed through a screen with substantially square apertures having a mesh size of 2 mm on each side, dried in an oven with hot air at 155°C and finally granulated and screened.

The average particle size of the resulting composition of this invention was 1.5 mm.

### EXAMPLE 2

### Use of the composition of the invention

77 tonnes of scrap iron, 7 tonnes of pig iron and 800 kg of carbon in pieces were introduced from above into a direct-arc electric furnace with eccentric bottom tapping (EBT) having a capacity of 80 tonnes, these charge materials being introduced with the aid of baskets preheated to a temperature of 600-700°C.

The furnace was then closed by lowering the roof, and the charge was heated to about 1650°C.

A current of oxygen amounting to 40 Nm³ per tonne of charge was injected into the molten bath during the melting operation from the side of the furnace, using a supersonic lance.

A sample taken from the slag about 18 minutes before the tapping of the molten steel was found to have the following percent composition by weight: 7.60% of SiO₂; 4.10% of Al₂O₃; 53.10% of Fe₂O₃; 4.10% of MnO; 2.20% of Cr₂O₃; 26.00% of CaO; 2.00% of MgO; 0.33% of TiO₂; 0.02% of K₂O; 0.06% of Na₂O, 0.39% of P₂O₅ and 0.11 % of S. The total amount of slag formed was estimated to be about 10 tonnes.

700 kg of the composition prepared in Example 1 were introduced above and below the slag layer with the aid of air, blown in through a lance. This operation was begun directly after the sample was taken and it lasted 16 minutes.

This gave 7.5 tonnes of a slag containing 38 wt-% of Fe₂O₃, calculated on the total weight of the slag.

### COMPARATIVE EXAMPLE 1

The procedure of Example 2 was repeated, but with the conventional method. The only difference between the latter and the process of the invention was that 672 kg of carbon powder were now blown in instead of the composition of the invention, but this was done in the same way and during the same period of time as the addition of the composition in Example 2.

The sample taken from the slag before the introduction of the carbon powder by the blowing-in method was begun was found to have the following percent composition by weight: 7.50% of SiO₂; 5.46% of Al₂O₃; 57.40% of Fe₂O₃; 3.80% of MnO; 1.50% of Cr₂O₃; 21.40% of CaO; 2.10% of MgO; 0.23% of TiO₂; 0.03% of K₂O; 0.08% of Na₂O; 0.4% of P₂O₅ and 0.09% of S.

The final slag contained 53.6 wt-% of Fe₂O₃, calculated on its total weight.

### COMPARATIVE EXAMPLE 2

The composition of the invention for hindering and reducing the formation of iron oxides in slag formed in the melting process was evaluated on 519 heats (corresponding to about 42,000 tonnes of steel produced) in comparison with 590 conventional heats (corresponding to about 47,200 tonnes of steel produced), a fine carbon powder with a particle size of 0.01-5 mm (in jargon known as "foamy slag") being employed in this second case.

The charge materials were the same in both cases as regards the origin and nature of the scrap iron, and as regards the amount of pig iron present (0.20%).

The mean production data are listed in Table 1.

**Table 1**

| | Conventional Process | Process of the Invention |
|---|---|---|
| Mean charge | 92.55 t | 91.60 t |
| Amount of foamy slag | 0.35 t | |
| Amount of composition according to the invention | | 0.735 t |
| Amount of carbon | 1.1 t | 0.7 t |
| Yield | 86.53% | 88.54% |
| Mean hourly production | 78.96 t | 80.18 t |
| Power consumption | 379.5 kWh/t | 372 kWh/t |

The slag had the following mean composition.

**Table 2**

| Components | Conventional Process | Process of the Invention |
|---|---|---|
| FeO | 35-55% | 22-32% |
| CaO | 20-25% | 25-33% |
| Al₂O₃ | 5-6% | 8-13% |
| SiO₂ | 16-18% | 10-14% |
| MgO | 2-3% | 2-3% |
| MnO | 5-6% | 4-5% |
| Cr₂O₃ | 1-2% | 1-2% |
| Other oxides | 5-6% | 5-6% |

These results show that the composition of the invention reduces the amount of iron oxide in the slag by about 40-50% and raises the yield of the steel produced by about 2%.

Furthermore, the number of "off-temperature" alarms was reduced by more than 60%, and the oxygen content of the steel to be transferred to the "ladle furnace" was reduced by 400-500 ppm, from 1200-1500 ppm to 800-1000 ppm.

## Claims

1. A composition comprising substantially from 35 to 50 wt-% of C, from 10 to 20 wt-% of Al, from 25 to 40 wt-% of Al₂O₃, from 0 to 3 wt-% of CaO and from 0 to 3 wt-% of MgO, provided however that the combined amount of CaO and MgO is of from 1 to 6%, and optionally including SiO₂.

2. A composition according to claim 1, **characterized in that** it comprises from 2 to 10 wt-% of SiO₂.

3. A composition according to claim 2, **characterized in that** it comprises from 5 to 8 wt-% of SiO₂.

4. A composition according to any one of claims 1 to 3, **characterized in that** the amount of C is of from 40 to 45 wt-%.

5. A composition according to any one of claims 1 to 3, **characterized in that** the amount of aluminium is of from 10 to 15%.

6. A composition according to any one of claims 1 to 3, **characterized in that** the amount of aluminium oxide is of from 25 to 30%.

7. A composition according to any one of claims 1 to 3, **characterized in that** the total amount of calcium oxide and/or magnesium oxide is of from 5 to 6%.

8. A composition according to any one of claims 1 to 7, **characterized in that** the said composition has an average particle size of from 0.1 to 5 mm.

9. A composition according to claim 8, **characterized in that** the said composition has an average particle size of from 0.1 to 1.5 mm.

10. A process for the preparation of a granular composition, comprising the following steps:
1) mixing together carbon, aluminium, aluminium oxide as well as calcium oxide and/or magnesium oxide, in such quantities that every 100 parts by weight of the resulting mixture contain 35-50 wt-% of C, 10-20 wt-% of Al, 25-40 wt-% of Al₂O₃, 0-3 wt-% of CaO and 0-3 wt-% of MgO, provided however that the combined amount of CaO and MgO is 1-6 wt-%,
2) optionally grounding the thus obtained mixture,
3) kneading such mixture,
4) drying, and
5) granulating the thus obtained mixture.

11. A process according to claim 10, **characterized in that** step 3) is carried out by a wet method.

12. A process according to claim 10 or 11, **characterized in that** a binder is added in step 3).

13. A process according to claim 12, **characterized in that** the said binder consists of bentonite and water.

14. A process according to claim 13, **characterized in that** the amount of bentonite is of from 3 to 15 wt-% (calculated on the mass to be granulated), and the amount of water is of from 6 to 15 wt-% (also calculated on the mass to be granulated).

15. A process according to any one of claims 10 to 14, **characterized in that** step 4) is carried out at a temperature of from 50 to 200°C.

16. A process for hindering and reducing the formation of iron oxides in the slag during the production of steel in an electrical furnace, in which
a) scrap iron is melted in the presence of conventional additives and
b) a current of oxygen is passed into the molten bath,
**characterized in that**
c) 5-10 kg of a composition according to any of claims 1 to 9 are added per tonne of molten steel over a period of at least 10 minutes in the last stage of the melting operation, before the steel is tapped into the ladle.

17. A process according to claim 16, **characterized in that** the composition added in step c) is introduced into the furnace by blowing it in above and/or below the slag.

18. A process according to claim 16, **characterized in that** the composition added in step c) is introduced into the furnace by injecting it directly into the molten bath from the side or from the bottom.

## Patentansprüche

1. Zusammensetzung, die im wesentlichen 35-50 Gew.% C, 10-20 Gew.% Al, 25-40 Gew.% Al₂O₃, 0-3 Gew.% CaO und 0-3 Gew.% MgO umfasst, mit der Massgabe, dass die kombinierte Menge an CaO und MgO 1-6 % beträgt, und die gegebenenfalls SiO₂ einschliesst.

2. Zusammensetzung gemäss Anspruch 1, **dadurch gekennzeichnet, dass** sie weiterhin 2-10 Gew.% SiO₂ umfasst.

3. Zusammensetzung gemäss Anspruch 2, **dadurch gekennzeichnet, dass** sie 5-8 Gew.% SiO₂ umfasst.

4. Zusammensetzung gemäss mindestens einem der Ansprüche 1-3, **dadurch gekennzeichnet, dass** die Menge an C 40-45 Gew.% beträgt.

5. Zusammensetzung gemäss mindestens einem der Ansprüche 1-3, **dadurch gekennzeichnet, dass** die Menge an Aluminium 10-15 % beträgt.

6. Zusammensetzung gemäss mindestens einem der Ansprüche 1-3, **dadurch gekennzeichnet, dass** die Menge an Aluminiumoxid 25-30 % beträgt.

7. Zusammensetzung gemäss mindestens einem der Ansprüche 1-3, **dadurch gekennzeichnet, dass** die Gesamtmenge an Calciumoxid und/oder Magnesiumoxid 5-6 % beträgt.

8. Zusammensetzung gemäss mindestens einem der Ansprüche 1 bis 7, **dadurch gekennzeichnet, dass** die Zusammensetzung eine durchschnittliche Teilchengrösse von 0,1-5 mm aufweist.

9. Zusammensetzung gemäss Anspruch 8, **dadurch gekennzeichnet, dass** die Zusammensetzung eine durchschnittliche Teilchengrösse von 0,1-1,5 mm aufweist.

10. Verfahren zur Herstellung einer granularen Zusammensetzung, das die folgenden Schritte umfasst:
(1) Vermischen von Kohlenstoff, Aluminium, Aluminiumoxid sowie Calciumoxid und/oder Magnesiumoxid in solchen Mengen, dass 100 Gew.-Teile der resultierenden Mischung 35-50 Gew.% C, 10-20 Gew.% Al, 25-40 Gew.% Al₂O₃, 0-3 Gew.% CaO und 0-3 Gew.% MgO enthalten, mit der Massgabe, dass die kombinierte Menge an CaO und MgO 1-6 Gew.% beträgt,
(2) gegebenenfalls Mahlen der so erhaltenen Mischung,
(3) Kneten der Mischung,
(4) Trocknen und
(5) Granulieren der so erhaltenen Mischung.

11. Verfahren gemäss Anspruch 10, **dadurch gekennzeichnet, dass** Schritt (3) nach einem Nassverfahren durchgeführt wird.

12. Verfahren gemäss Anspruch 10 oder 11, **dadurch gekennzeichnet, dass** in Schritt (3) ein Binder zugegeben wird.

13. Verfahren gemäss Anspruch 12, **dadurch gekennzeichnet, dass** der Binder aus Bentonit und Wasser besteht.

14. Verfahren gemäss Anspruch 13, **dadurch gekennzeichnet, dass** die Menge an Bentonit 3-15 Gew.% (berechnet auf Basis der zu granulierenden Masse) und die Menge an Wasser 6-15 Gew.% (ebenfalls auf Basis der zu granulierenden Masse berechnet) beträgt.

15. Verfahren gemäss mindestens einem der Ansprüche 10-14, **dadurch gekennzeichnet, dass** Schritt (4) bei einer Temperatur von 50-200°C durchgeführt wird.

16. Verfahren zur Verhinderung und Verringerung der Eisenoxidbildung in der Schlacke bei der Stahlherstellung in einem elektrischen Ofen, worin
(a) Eisenschrott in Gegenwart üblicher Zusatzstoffe geschmolzen, und
(b) ein Sauerstoffstrom in das Schmelzbad eingeführt wird,
**dadurch gekennzeichnet, dass**
(c) 5-10 kg einer Zusammensetzung gemäss mindestens einem der Ansprüche 1 bis 9 pro Tonne geschmolzenen Stahls innerhalb eines Zeitraums von mindestens 10 Minuten in der letzten Stufe des Schmelzbetriebs, bevor der Stahl in die Giesspfanne abgestochen wird, zugegeben wird.

17. Verfahren gemäss Anspruch 16, **dadurch gekennzeichnet, dass** die Zusammensetzung, die in Schritt (c) zugegeben wird, durch Einblasen auf und/oder unter die Schlacke in den Ofen eingeführt wird.

18. Verfahren gemäss Anspruch 16, **dadurch gekennzeichnet, dass** die in Schritt (c) zugegeben Zusammensetzung durch direkte Injektion in das Schmelzbad von der Seite oder vom Boden in den Ofen eingeführt wird.

## Revendications

1. Une composition comprenant, en particulier, en pourcentage du poids, entre 35 et 50% du poids de C, entre 10 et 20% du poids d'Al, entre 25 et 40% du poids d'Al₂O₃, entre 0 et 3% du poids de CaO, et entre 0 et 3% du poids de MgO, à condition cependant que la quantité totale de CaO et de MgO soit comprise entre 1 et 6%, et contenant facultativement du SiO₂.

2. Une composition selon la revendication 1, **caractérisée en ce qu'**elle comprend entre 2 et 10% du poids de SiO₂.

3. Une composition selon la revendication 2, **caractérisée en ce qu'**elle comprend entre 5 et 8% du poids de SiO₂.

4. Une composition selon l'une quelconque des revendications 1 à 3, **caractérisée en ce que** la quantité de C est comprise entre 40 et 45% du poids.

5. Une composition selon l'une quelconque des revendications 1 à 3, **caractérisée en ce que** la quantité d'aluminium est comprise entre 10 et 15%.

6. Une composition selon l'une quelconque des revendications 1 à 3, **caractérisée en ce que** la quantité d'oxyde d'aluminium est comprise entre 25 et 30%.

7. Une composition selon l'une quelconque des revendications 1 à 3, **caractérisée en ce que** la quantité totale d'oxyde de calcium et/ou d'oxyde de magnésium est comprise entre 5 et 6%.

8. Une composition selon l'une quelconque des revendications 1 à 7, **caractérisée en ce que** ladite composition a une taille moyenne de particules comprise entre 0,1 et 5 mm.

9. Une composition selon la revendication 8, **caractérisée en ce que** ladite composition a une taille moyenne de particules comprise entre 0,1 et 1,5 mm.

10. Un procédé de préparation d'une composition granulaire, comprenant les étapes suivantes :
1) le mélange de carbone, d'aluminium, d'oxyde d'aluminium, ainsi que d'oxyde de calcium et/ou d'oxyde de magnésium, dans des quantités telles que le mélange obtenu contienne, en pourcentage du poids : entre 35 et 50% du poids de C, entre 10 et 20% du poids d'Al, entre 25 et 40% du poids d'Al₂O₃, entre 0 et 3% du poids de CaO, et entre 0 et 3% du poids de MgO, à condition cependant que la quantité totale de CaO et de MgO soit comprise entre 1 et 6%,
2) le broyage facultatif du mélange ainsi obtenu,
3) le malaxage ce mélange,
4) le séchage, et
5) la granulation de la pâte ainsi obtenue.

11. Un procédé selon la revendication 10, **caractérisé en ce que** l'étape 3) est réalisée au moyen d'un procédé par voie humide.

12. Un procédé selon la revendication 10 ou 11, **caractérisé en ce qu'**un liant est ajouté lors de l'étape 3) .

13. Un procédé selon la revendication 12, **caractérisé en ce que** ledit liant est constitué de bentonite et d'eau.

14. Un procédé selon la revendication 13, **caractérisé en ce que** la quantité de bentonite varie entre 3 et 15% du poids (calculé en fonction de la masse devant être granulée), et la quantité d'eau varie entre 6 et 15% du poids (calculé également en fonction de la masse devant être granulée).

15. Un procédé selon l'une quelconque des revendications 10 à 14, **caractérisé en ce que** l'étape 4) est réalisée à une température comprise entre 50 et 200°C.

16. Un procédé pour retarder et réduire la formation d'oxydes de fer dans le laitier lors de la production d'acier dans un four électrique, dans lequel
a) la ferraille est fondue en présence des additifs conventionnels et
b) un courant d'oxygène passe dans le bain de fusion,
**caractérisé en ce que** :
c) 5 à 10 kg d' une composition selon l'une quelconque des revendications 1 à 9 sont ajoutés par tonne d'acier liquide, pendant au moins 10 minutes lors de la dernière étape de la fusion, avant que l'acier soit coulé dans la poche de coulée.

17. Un procédé selon la revendication 16, **caractérisé en ce que** la composition ajoutée pendant l'étape c) est introduite dans le four par insufflation au-dessus et/ou en dessous du laitier.

18. Un procédé selon la revendication 16, **caractérisé en ce que** la composition ajoutée pendant l' étape c) est introduite dans le four en l'injectant directement dans le bain de fusion, depuis les côtés ou le bas.
